# EUROPEAN PATENT APPLICATION

(11) **EP 3 513 649 A1**
(43) Date of publication of application: **24.07.2019**
(21) Application number: 18191748.5
(22) Date of filing: 30.08.2018
(51) Int. Cl.: A01G 17/08

(54) **BINDING MACHINE FOR AGRICULTURE**

(30) Priority: 22.01.2018 KR 20180007849
(71) Applicant: Cho, Nam Sun, Daegu 42142 (KR)
(72) Inventor: Cho, Nam Sun, Daegu 42142 (KR)
(74) Representative: Weickmann & Weickmann PartmbB

(57) **Abstract**

Provided is a binding machine used to erect a post and bind a stem or branch of a plant to the post to enable the stem or branch to maintain a desired posture during the cultivation of fruits, vegetables, or flowers or gardening. The binding machine is configured not to allow an operating lever to be moved down when a binding tape is hooked to a tape pulling needle to prevent an erroneous operation while the binding tape is being drawn out and configured to prevent an iron pin bundle from being loaded upside down onto an iron pin supply part and to prevent an iron pin push bar from arbitrarily escaping the iron pin supply part and being lost when the iron pin push bar is separated from the iron pin supply part.

## Description

### CROSS-REFERENCE TO RELATED APPLICATION

This application claims the benefit of Korean Patent Application No. 10-2018-0007849, filed on January 22, 2018, in the Korean Intellectual Property Office, the disclosure of which is incorporated herein in its entirety by reference.

### BACKGROUND

### 1. Field

One or more embodiments relate to a binding machine used to erect a post and bind a stem or branch of a plant to the post to enable the stem or branch to maintain a desired posture during the cultivation of fruits, vegetables, or flowers or gardening.

### 2. Description of the Related Art

As one of the binding machines for agriculture according to the related art, a binding machine disclosed in Korea Patent No. 10-1509623 registered by the applicant of this application is used.

The related art will be described with reference to the binding machine for agriculture. A main body of the binding machine includes an iron pin supply part charged with an iron pin bundle, in which fastening iron pins having a " 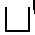 " shape are bonded to each other using an adhesive such that side surfaces of the respective fastening iron pins are in close contact with each other. An iron pin outlet is formed in a front end of the iron pin supply part and an iron pin push bar is provided in an opposite end to push the iron pin bundle toward the iron pin outlet. A coil spring is provided at a coupling rod of the iron pin push bar, and a stopper is provided at an outer end of the coupling rod.

The iron pin supply part is supported by a support shaft of the main body of the binding machine, and the front end of the iron pin supply part moves up and down at a certain angle. The iron pin outlet is formed in the front end of the iron pin supply part. A binding tape supply part is formed at a bottom of the main body of the binding machine. A tape discharge chamber is formed in a front end of the iron pin outlet. The binding tape supply part includes a tape supply channel and a tape receiving chamber accommodating a binding tape reel. A cutting blade is provided between the iron pin outlet and the tape discharge chamber. An iron pin extrusion plate is provided in a bottom of the iron pin outlet. The iron pin extrusion plate is attached to the main body of the binding machine and pushes iron pins one by one toward the iron pin outlet. A lift operation body is provided in a top of the main body of the binding machine. A lower portion of the lift operation body is connected to the support shaft of the main body of the binding machine. A tape pulling device having a tape pulling needle is provided in a front end of the lift operation body. An iron pin former is provided inside the front end of the lift operation body to face the iron pin outlet. The iron pin former has a bending groove to bend inwards opposite open ends of a fastening iron pin. The front end of the lift operation body may be moved close to or away from a tape outlet using an elastic spring and an operating lever.

An operating plate, which operates a needle plate of the tape pulling needle, is provided in the tape pulling device. When the lift operation body moves toward the tape outlet of the main body of the binding machine and is in contact with an operating protrusion of the main body, the operating plate moves a certain distance and rotates the tape pulling needle toward the tape outlet such that the tape pulling needle penetrates through an end portion of a binding tape in a first compression stage. In this state, when a pressure applied to the operating lever is released, the lift operation body returns to the original position and draws the binding tape hooked to the tape pulling needle.

When the operating lever is pushed again after the binding tape is put around a stem of a plant, the operating plate disengages the tape pulling needle from the binding tape, and the iron pin extrusion plate extrudes an iron pin to fasten opposite end portions of a binding loop of the binding tape around the plant stem. The binding tape outside the fastened portions of the binding loop is cut to complete binding.

However, when the lift operation body is moved down to draw the binding tape and a lower end of the operating plate is in contact with a compression protrusion, the operating plate moves the certain distance and rotates the tape pulling needle toward the tape outlet such that the tape pulling needle penetrates through an exposed upper end of the binding tape. After the binding tape is hooked up to the tape pulling needle, it is necessary to release the pressure applied to the operating lever and move the lift operation body outwards. When a user forgets to move the lift operation body outwards and pushes the operating lever again, the operating lever moves the tape pulling needle catching the binding tape outwards, thereby disengaging the tape pulling needle from the binding tape. In spite of this state, the iron pin extrusion plate still works to extrude an iron pin and bend an end of the iron pin, resulting in an error in which only the iron pin is bent without the binding tape forming a binding loop. This error may cause a breakdown in the binding machine, requiring repair.

A feeding slot of the iron pin supply part charged with the iron pin bundle has an open quadrangular groove, so that an iron pin may be inserted into the feeding slot regardless of whether an opening of the iron pin faces upwards or downwards. Accordingly, it may happen that a user puts the iron pin bundle in the iron pin supply part with an opening of the iron pin bundle facing downwards. When the user operates the operating lever without noticing this, an iron pin may not fasten opposite ends of the binding tape to each other. The coupling rod and the coil spring are provided at the iron pin push bar which pushes the iron pin bundle, and the stopper is provided at the outer end of the coupling rod. The iron pin push bar is provided in the iron pin supply part. When the stopper is taken off a trap sill to replenish a shortage of the iron pin bundle, the iron pin push bar pops out due to the elasticity of the coil spring. Accordingly, unless the user immediately catches the iron pin push bar, the iron pin push bar pops out of the feeding slot and comes away from the main body of the binding machine and is thus difficult to find. As a result, the binding may not be continued.

### SUMMARY

One or more embodiments include a binding machine for agriculture.

Additional aspects will be set forth in part in the description which follows and, in part, will be apparent from the description, or may be learned by practice of the presented embodiments.

According to one or more embodiments, a binding machine for agriculture includes a main body including an iron pin supply part configured to receive an iron pin bundle, an iron pin push bar configured to elastically press the iron pin bundle toward an iron pin outlet, an iron pin extrusion plate configured to extrude a fastening iron pin from the iron pin bundle toward the iron pin outlet, a tape discharge chamber accommodating a binding tape drawn from a tape reel receiving chamber, a compression protrusion, and a cutting blade configured to cut the binding tape; a lift operation body coupled to the main body and configured to rotate around a rotation shaft and to move up and down; an operating lever connected to the main body and the lift operation body and configured to move the lift operation body downwards when the operating lever is pushed down; a restoring spring providing an upward elastic force to the lift operation body; an iron pin former provided in the lift operation body to face the iron pin outlet and configured to bend opening ends of the fastening iron pin; a tape pulling device positioned in the lift operation body and including a pulling needle plate, a needle plate pressing spring, an operating plate, a spring, and a tape pressing protrusion, the pulling needle plate having a tape pulling needle drawing the binding tape and being rotatable inwards and outwards, the needle plate pressing spring providing an elastic force to enable the pulling needle plate to rotate inwards, the operating plate being in contact with the compression protrusion and moving upwards when the lift operation body primarily moves downwards to allow the pulling needle plate to rotate inwards such that the tape pulling needle strikes through the binding tape and the binding tape is hooked to the tape pulling needle, the spring applying a downward elastic force to the operating plate, and the tape pressing protrusion guiding the binding tape toward the iron pin former; and a braking bar caught in a trap recess when the lift operation body primarily moves downwards to prevent the operating lever from being pushed down in a state where the binding tape is hooked to the tape pulling needle, the trap recess being provided in the operating plate.

The braking bar may include a coil portion formed by winding a steel wire in a spiral and supported by the tape pulling device; and an upper protruding rod and a lower protruding rod extending from opposite ends, respectively, of the coil portion toward the trap recess of the operating plate and the tape pressing protrusion, respectively.

An iron pin guide protrusion may be provided on an inner surface of an iron pin bundle feeding slot of the iron pin supply part to protrude from a ceiling of the iron pin bundle feeding slot toward a bottom of the iron pin bundle feeding slot, and gaps may be respectively formed beside and below the iron pin guide protrusion to allow one protrusion and an adjacent bottom portion of the fastening iron pin to pass.

A side opening may be provided at one side of the iron pin bundle feeding slot to extend from an end of an inner side of the iron pin guide protrusion by a length corresponding to a length of the iron pin push bar.

### BRIEF DESCRIPTION OF THE DRAWINGS

These and/or other aspects will become apparent and more readily appreciated from the following description of the embodiments, taken in conjunction with the accompanying drawings in which:
FIG. 1 is an exterior front view of a binding machine according to one or more embodiments;
FIG. 2 is a partial enlarged view of a braking bar according to one or more embodiments;
FIG. 3 is a partial exploded perspective view of a tape pulling device according to one or more embodiments;
FIG. 4 is a diagram of an example in which a tape is hooked to a tape pulling needle, according to one or more embodiments;
FIG. 5 is an enlarged view of FIG. 4;
FIG. 6 is a diagram of an example in which the tape of FIG. 4 is drawn;
FIG. 7 is an enlarged view of FIG. 6;
FIG. 8 is a diagram of an example in which a binding loop is cut, according to one or more embodiments;
FIG. 9 is an enlarged view of FIG. 8;
FIG. 10 is a diagram of an example in which a binding loop has been cut;
FIG. 11 is a diagram of a feeding slot of an iron pin supply part, according to one or more embodiments; and
FIG. 12 is a diagram showing an iron pin push bar according to one or more embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

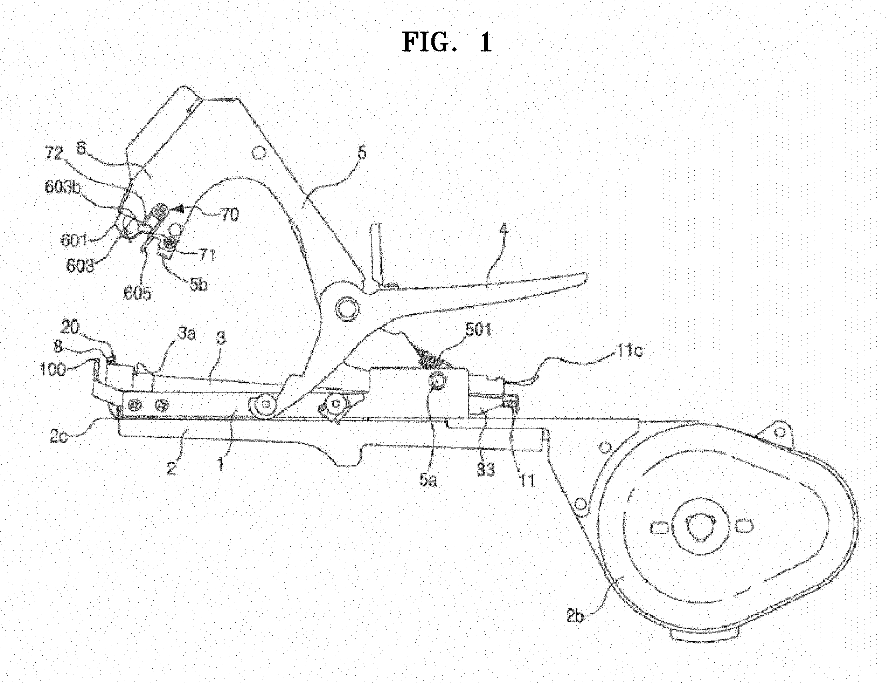

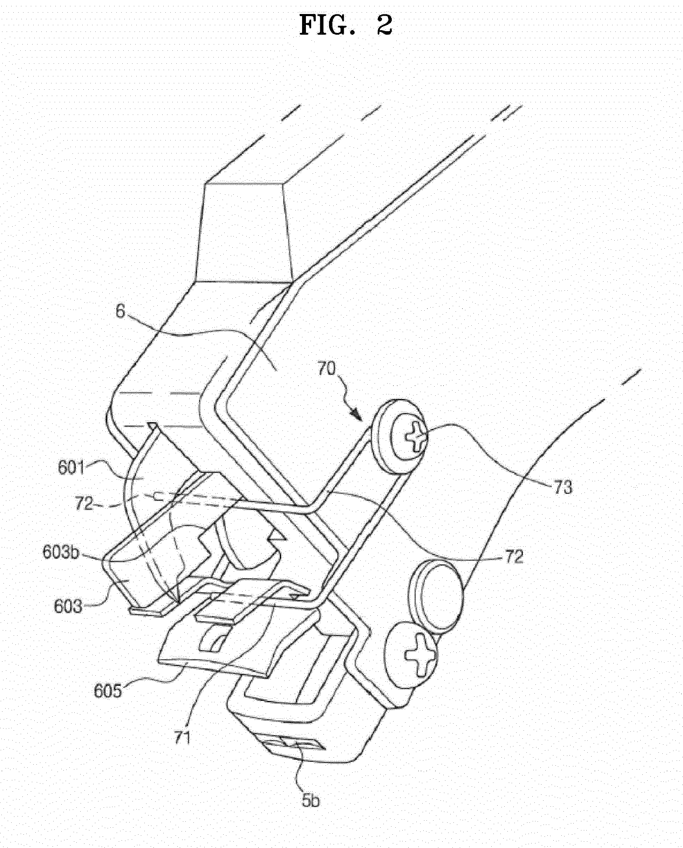

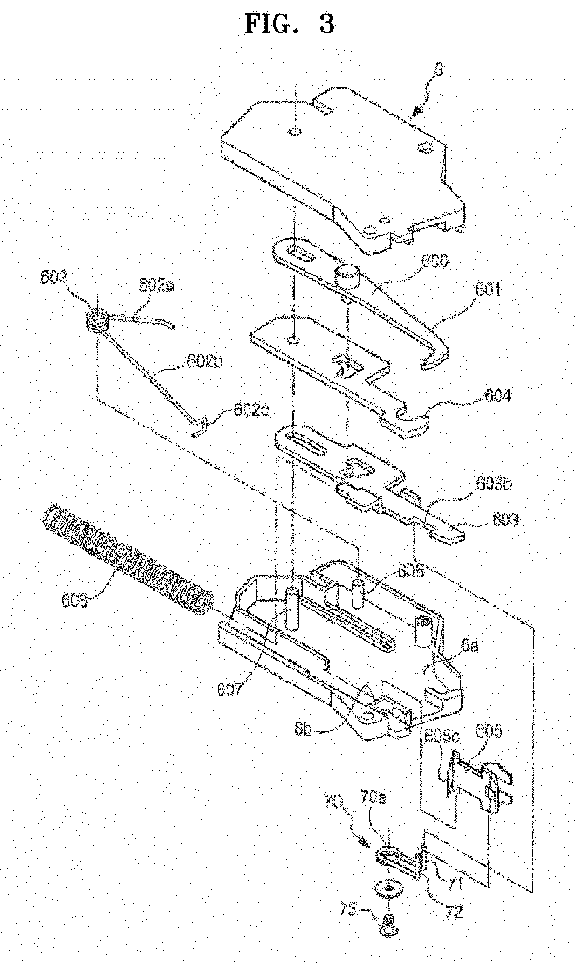

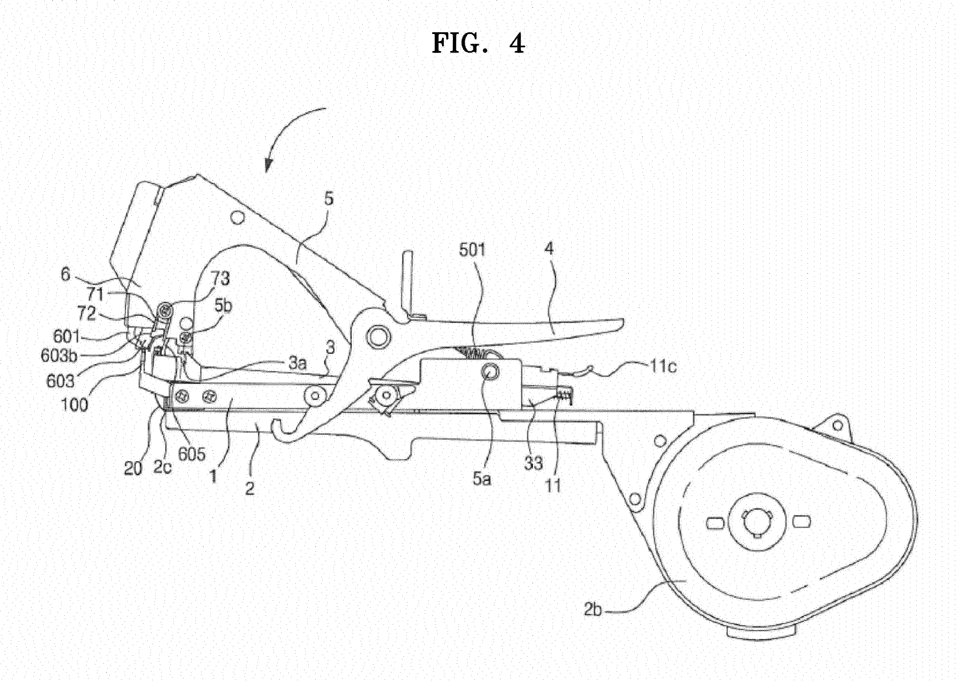

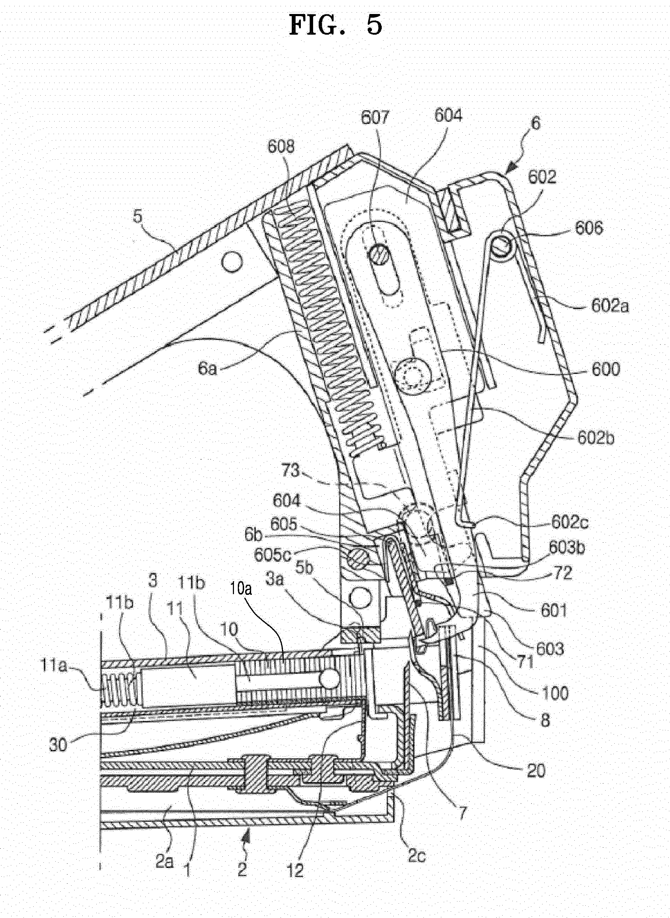

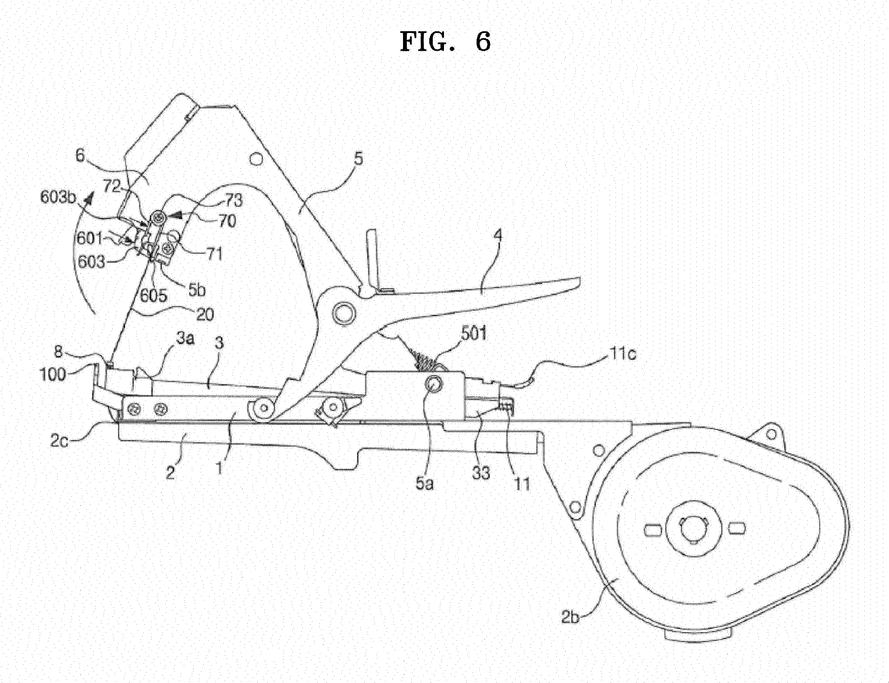

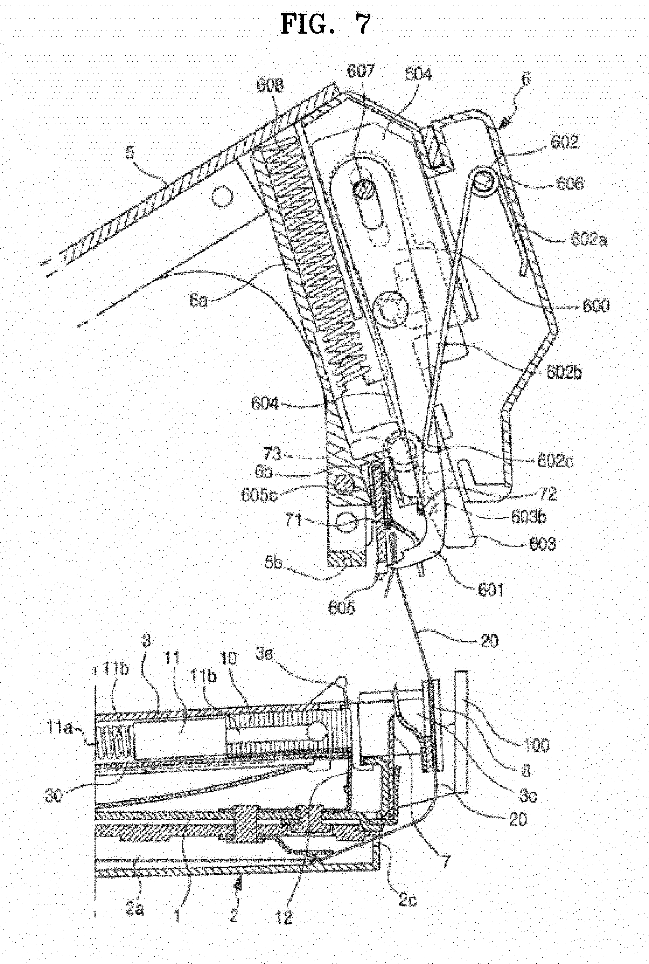

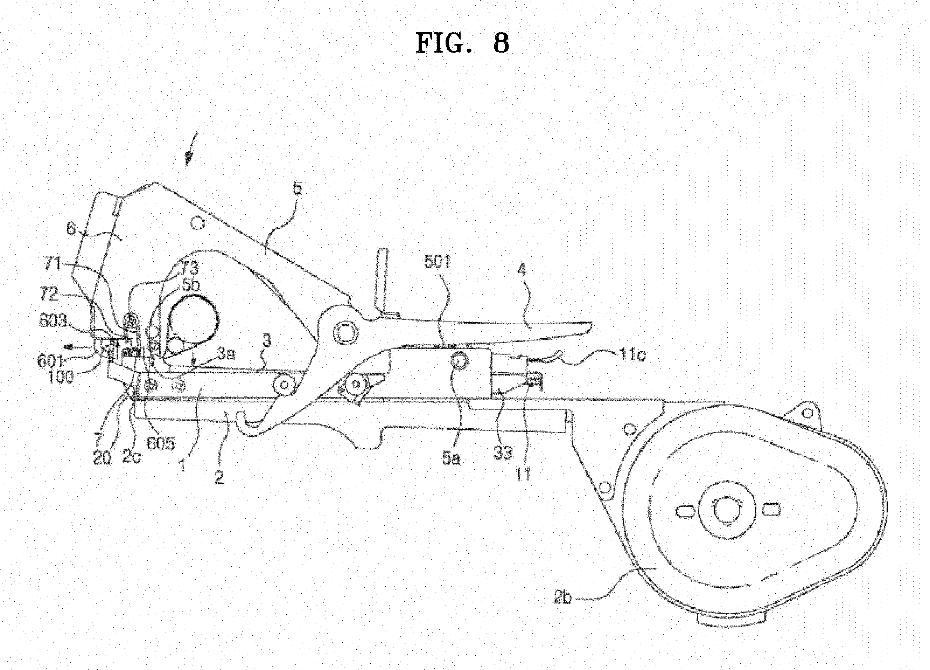

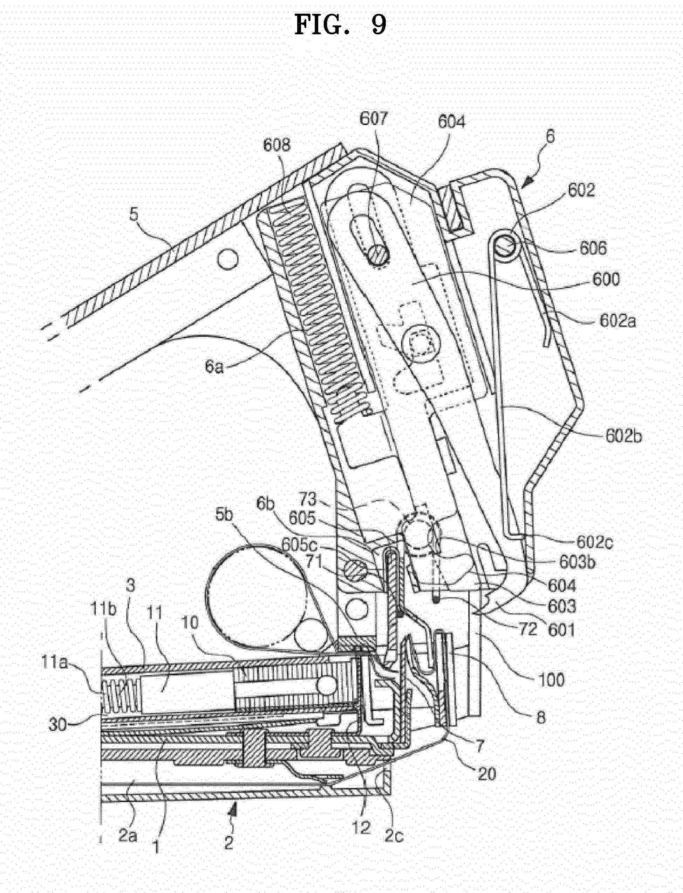

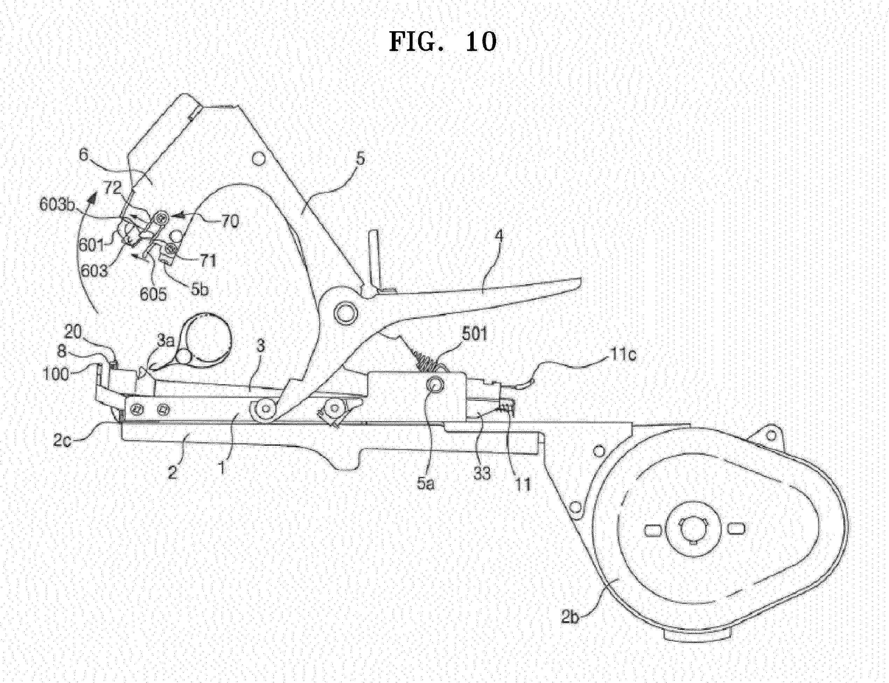

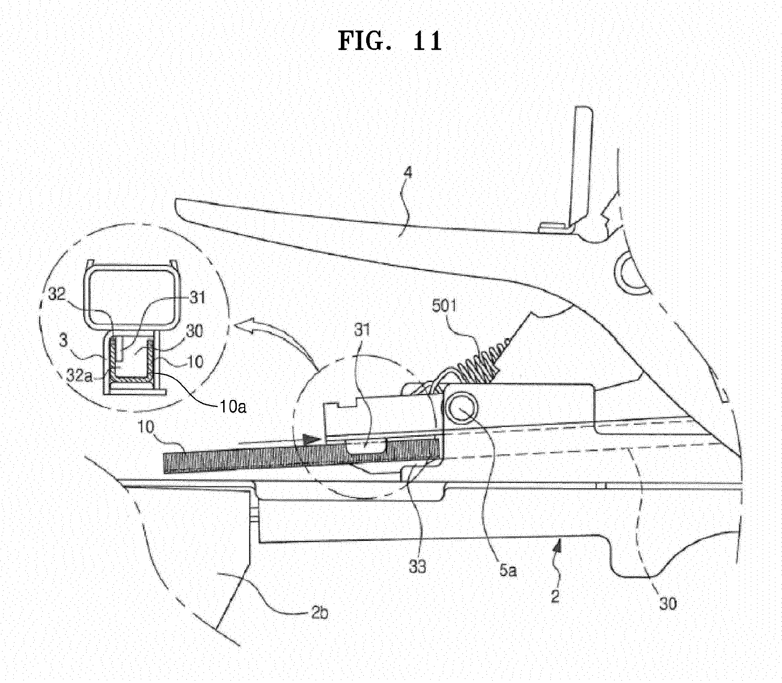

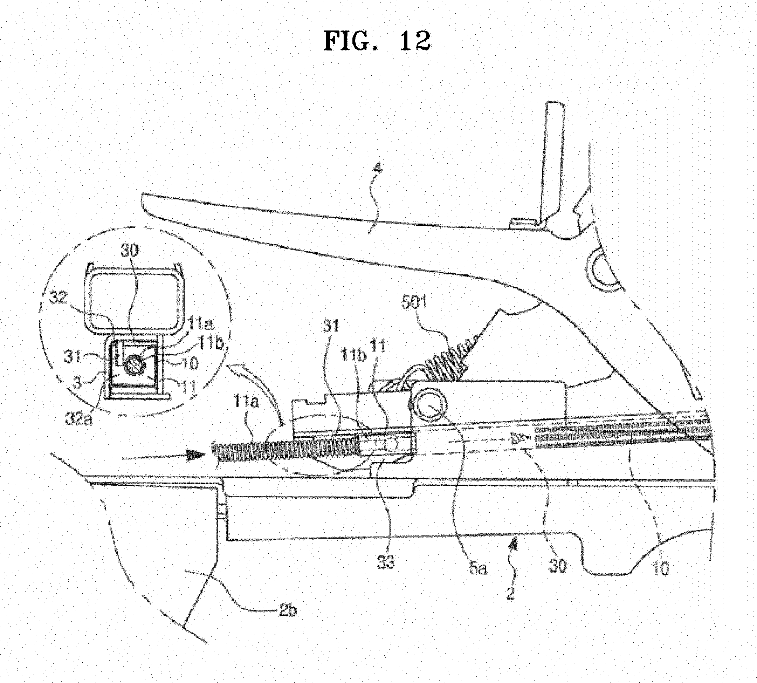

FIG. 1 is an exterior front view of a binding machine according to one or more embodiments. FIG. 2 is a partial enlarged view of a braking bar according to one or more embodiments. FIG. 3 is a partial exploded perspective view of a tape pulling device according to one or more embodiments. FIG. 4 is a diagram of an example in which a tape is hooked to a tape pulling needle, according to one or more embodiments. FIG. 5 is an enlarged view of FIG. 4. FIG. 6 is a diagram of an example in which the tape of FIG. 4 is drawn. FIG. 7 is an enlarged view of FIG. 6. FIG. 8 is a diagram of an example in which a binding loop is cut, according to one or more embodiments. FIG. 9 is an enlarged view of FIG. 8. FIG. 10 is a diagram of an example in which a binding loop has been cut. FIG. 11 is a diagram of a feeding slot of an iron pin supply part, according to one or more embodiments. FIG. 12 is a diagram showing an iron pin push bar according to one or more embodiments. Embodiments of a binding machine for agriculture will be described with reference to FIGS. 1 through 12.

An iron pin supply part 3 is located above a main body 1 of the binding machine. The iron pin supply part 3 is charged with an iron pin bundle 10, in which fastening iron pins 10a having a " 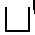 " shape are bonded to each other using an adhesive such that side surfaces of the respective fastening iron pins 10a are in close contact with each other. An iron pin outlet 3a is formed in a front end portion of the iron pin supply part 3 to guide each fastening iron pin 10a upwards. An iron pin push bar 11 is provided at a side opposite the iron pin outlet 3a in the iron pin supply part 3 to push the iron pin bundle 10 toward the iron pin outlet 3a. A coupling rod 11a is connected to the iron pin push bar 11. A coil spring 11b pushes the iron pin push bar 11 toward the iron pin outlet 3a. A stopper 11c is provided at an end of the coupling rod 11a.

An iron pin extrusion plate 12 is provided in a lower portion of the main body 1, which faces the iron pin outlet 3a. The iron pin extrusion plate 12 moves in and out of a guide hole 30a, which faces the iron pin outlet 3a, to extrude each fastening iron pin 10a toward the iron pin outlet 3a.

A binding tape supply part 2 is located below the main body 1 to be parallel with the iron pin supply part 3. A tape supply channel 2a for supplying a binding tape 20 is formed in the binding tape supply part 2. The tape supply channel 2a is provided at the rear of the main body 1 to communicate with a tape reel receiving chamber 2b accommodating a binding tape reel (not shown). A tape outlet 2c is provided in a front end of the tape supply channel 2a. The tape supply channel 2a communicates with a tape discharge chamber 8 in the front end portion of the iron pin supply part 3 through the tape outlet 2c. The binding tape 20 is unwound from the tape reel receiving chamber 2b and fed to the tape discharge chamber 8 through the tape supply channel 2a and the tape outlet 2c.

A lift operation body 5 is located above the main body 1. The lift operation body 5 is coupled to the main body 1 through a rotation shaft 5a. An operating lever 4 is connected to the main body 1 and the lift operation body 5. When the operating lever 4 is pushed down, the lift operation body 5 is moved down. A restoring spring 501 provides an upward elastic force to the lift operation body 5. When the operating lever 4 is pushed down, the lift operation body 5 rotates around the rotation shaft 5a and moves downwards, as shown in FIG. 4. When a force pushing down the operating lever 4 is released, the lift operation body 5 moves upwards and returns to an original position due to the restoring spring 501, as shown in FIG. 1. A tape pulling device 6 having a tape pulling needle 601 is located in a front end of the lift operation body 5. An iron pin former 5b bending opening ends of each fastening iron pin 10a is positioned in the tape pulling device 6 to face the iron pin outlet 3a.

The tape pulling device 6 includes a pulling needle plate 600 having the tape pulling needle 601, which draws the binding tape 20, in a lower end thereof; and a needle plate pressing spring 602 providing an elastic force to the pulling needle plate 600. The pulling needle plate 600 may rotate inwards and outwards. The needle plate pressing spring 602 provides an elastic force to the pulling needle plate 600 such that the pulling needle plate 600 rotates inwards. The needle plate pressing spring 602 includes a coil portion wound in a spiral, a support portion 602a extending from an end of the coil portion, and an operating portion 602b extending from an opposite end of the coil portion. The operating portion 602b extends longer than the support portion 602a and has a trap portion 602c at an end thereof. The coil portion of the needle plate pressing spring 602 is fitted to a spring support rod 606 formed in an inside 6a of the tape pulling device 6, the support portion 602a is in close contact with an inner wall of the tape pulling device 6, and the operating portion 602b is coupled to the tape pulling needle 601.

An installation rod 607 is provided in the inside 6a of the tape pulling device 6. An operating plate 603, which is triggered by a spring 608, a guidance plate 604, and the pulling needle plate 600 are sequentially installed at the installation rod 607. A tape pressing protrusion 605 having a spring 605c is provided in a lower receding groove 6b of the tape pulling device 6.

A tape cutting blade 7, of which the lower end is fixed to a front end portion of the main body 1, is located between the tape discharge chamber 8 and the iron pin outlet 3a, which are formed in the front end portion of the iron pin supply part 3, to protrude upwards. A compression protrusion 100 is formed in the front end portion of the main body 1 to contact a lower end of the operating plate 603 of the tape pulling device 6.

When the operating lever 4 is pushed down in this structure, the binding tape 20 in the binding tape supply part 2 is drawn by the tape pulling needle 601 and shaped into a binding loop 20a, a plant and a post are bound together with the binding loop 20a, opposite ends of the binding loop 20a are fastened to each other by a fastening iron pin 10a, and the binding loop 20a fastened at the opposite ends thereof is cut from the binding tape 20 by the tape cutting blade 7.

The operating plate 603 activates the tape pulling needle 601 of the tape pulling device 6 installed in the lift operation body 5. When the lift operation body 5 primarily moves downwards, the operating plate 603 is in contact with the compression protrusion 100 and moved upwards to enable the pulling needle plate 600 to rotate inwards such that the binding tape 20 is hooked to the tape pulling needle 601. The spring 608 applies a downward elastic force to the operating plate 603. The tape pressing protrusion 605 guides the binding tape 20 toward the iron pin former 5b.

A trap recess 603b is provided in the operating plate 603. The trap recess 603b may be provided in an exposed portion of the operating plate 603, which is exposed outside the tape pulling device 6. A braking bar 70 is provided in an outer surface of the tape pulling device 6 to be inserted into the trap recess 603b of the operating plate 603. When the lift operation body 5 primarily moves downwards, the braking bar 70 is caught in the trap recess 603b of the operating plate 603 and thus prevents the operating lever 4 from being pushed down in a state where the binding tape 20 is hooked to the tape pulling needle 601. In other words, when the operating plate 603 primarily moves inwards (or upwards), the braking bar 70 is caught in the trap recess 603b and thus puts the brakes on the operating lever 4, so that the operating lever 4 moves no further downwards in the state where the binding tape 20 is hooked to the tape pulling needle 601.

Referring to FIGS. 2 and 3, the braking bar 70 may include a coil portion 70a formed by winding a steel wire in a spiral and an upper protruding rod 71 and a lower protruding rod 72 respectively extending from opposite ends of the coil portion 70a. The coil portion 70a is supported by a surface support rod 73 of the tape pulling device 6. The upper protruding rod 71 and the lower protruding rod 72 are bent toward the operating plate 603 along a surface of the tape pulling device 6 and inserted into the trap recess 603b of the operating plate 603 and the tape pressing protrusion 605, respectively.

Referring to FIGS. 4 and 5, when the operating lever 4 is pushed down, the lift operation body 5 rotates around the rotation shaft 5a and moves downwards to the main body 1. The lower end of the operating plate 603 of the tape pulling device 6 installed in the lift operation body 5 is in contact with the compression protrusion 100 in the front end portion of the main body 1. Then, the operating plate 603 of the tape pulling device 6 primarily moves inwards (or upwards), and simultaneously the tape pulling needle 601 loaded onto the needle plate pressing spring 602 inwardly rotates toward an upper end of the binding tape 20 reaching the tape discharge chamber 8 and strikes through the upper end of the binding tape 20 such that the binding tape 20 is hooked to the tape pulling needle 601.

At this time, the braking bar 70, which protrudes from the surface of the tape pulling device 6 toward the trap recess 603b of the operating plate 603, is caught in the trap recess 603b and prevents the operating plate 603 from moving upwards. Accordingly, even when the operating lever 4 is continually pressed down, the lift operation body 5 moves no further downwards.

Therefore, a user no longer presses the operating lever 4, and a pressure applied to the operating lever 4 is released. As a result, the lift operation body 5 returns upward (or primarily moves upwards) so that the binding tape 20 hooked to the tape pulling needle 601 may be pulled out, as shown in FIGS. 6 and 7. When the binding tape 20 is pulled, the tape pulling needle 601 rotates one step inwards due to a force of the needle plate pressing spring 602, and the braking bar 70 rotates inwards together with the tape pulling needle 601 due to the force of the needle plate pressing spring 602 moving inwards. At this time, the upper end of the binding tape 20 is guided by the tape pulling needle 601 and the tape pressing protrusion 605 toward the iron pin former 5b and is positioned above the tape cutting blade 7.

At this time, the binding tape 20 exposed outside is arranged to be in contact with a plant's stem and a post and to be pushed toward a binding space so that the binding loop 20a is formed. As shown in FIGS. 8 and 9, when the lift operation body 5 is secondarily moved downwards by pressing the operating lever 4, the lower end of the operating plate 603 provided in the tape pulling device 6 of the lift operation body 5 is in contact with the compression protrusion 100 of the main body 1 and is moved upwards (or secondarily moved inwards) to move the guidance plate 604, so that the tape pulling needle 601 is rotated outwards to the original position. The iron pin extrusion plate 12 pushes a fastening iron pin 10a to the iron pin outlet 3a so that the fastening iron pin 10a is provided to a closed portion of the binding loop 20a where opposite ends of the binding loop 20a meet together. The fastening iron pin 10a penetrates through the closed portion and is then bent by a groove of the iron pin former 5b, so that the opposite ends of the binding loop 20a are fastened to each other by the fastening iron pin 10a. The binding tape 20 outside the fastened portion is in contact with the tape cutting blade 7 and thus cut, thereby completing binding. When the operating lever 4 is released, the tape pressing protrusion 605 returns to the original position and the lower protruding rod 72 of the braking bar 70 also returns to the original position, and therefore, the braking bar 70 returns to the position shown in FIG. 1 to prepare for the next operation. Accordingly, the binding machine becomes ready for a subsequent binding operation.

As described above, since an erroneous pressing of the operating lever 4 during a binding operation is prevented by using the braking bar 70, the binding operation may be efficiently and effectively performed. In addition, the upper protruding rod 71 and the lower protruding rod 72 extend from the coil portion 70a in the braking bar 70. The coil portion 70a is supported by the surface support rod 73. Since the upper protruding rod 71 is in contact with the trap recess 603b of the operating plate 603 and the lower protruding rod 72 is in contact with the tape pressing protrusion 605, when the tape pressing protrusion 605 returns to the original position, the upper protruding rod 71 also returns to the original position, thereby preparing for the next operation.

Referring to FIGS. 11 and 12, an iron pin guide protrusion 31 is provided on an inner surface of an iron pin bundle feeding slot 30 of the iron pin supply part 3 to protrude a certain length from a ceiling of the iron pin bundle feeding slot 30 toward a bottom of the iron pin bundle feeding slot 30. Gaps 32 and 32a, through which one protrusion and an adjacent bottom portion of each of the fastening iron pins 10a having the " 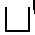 " shape pass, are respectively formed beside and below the iron pin guide protrusion 31 such that the fastening iron pins 10a are prevented from being put in the iron pin supply part 3 with the opening ends of the fastening iron pins 10a facing downwards. A side opening 33 is provided at one side of the iron pin bundle feeding slot 30 to extend from an end of an inner side of the iron pin guide protrusion 31 by a length substantially the same as the length of the iron pin push bar 11.

Since the iron pin guide protrusion 31 protrudes the certain length from the ceiling of the iron pin bundle feeding slot 30 of the iron pin supply part 3 toward the bottom of the iron pin bundle feeding slot 30, the fastening iron pins 10a may not be inserted into the iron pin bundle feeding slot 30 with the opening ends of the fastening iron pins 10a facing downwards. Only when the opening ends of the fastening iron pins 10a face upwards, i.e., the ceiling of the iron pin bundle feeding slot 30, the fastening iron pins 10a may be inserted into the iron pin bundle feeding slot 30, so that an erroneous insertion of the fastening iron pins 10a may be prevented.

In addition, since the iron pin guide protrusion 31 is biased to one of the opposite side walls of the iron pin bundle feeding slot 30, the coupling rod 11a of the iron pin push bar 11 is not hindered when the iron pin push bar 11 is inserted into the iron pin bundle feeding slot 30. When the iron pin push bar 11 is separated to replenish a shortage of the fastening iron pins 10a, an inner surface of the iron pin guide protrusion 31 is in contact with a step where the coupling rod 11a is connected to the iron pin push bar 11, and therefore, even though the iron pin push bar 11 moves outwards due to an elastic force of the coil spring 11b, the iron pin push bar 11 is stopped by the iron pin guide protrusion 31. In this state, the iron pin push bar 11 may be taken out through the side opening 33. As a result, the iron pin push bar 11 is not likely to be lost.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope of the disclosure as defined by the following claims.

## Claims

1. A binding machine for agriculture, the binding machine comprising:
a main body comprising an iron pin supply part configured to receive an iron pin bundle, an iron pin push bar configured to elastically press the iron pin bundle toward an iron pin outlet, an iron pin extrusion plate configured to extrude a fastening iron pin from the iron pin bundle toward the iron pin outlet, a tape discharge chamber accommodating a binding tape drawn from a tape reel receiving chamber, a compression protrusion, and a cutting blade configured to cut the binding tape;
a lift operation body coupled to the main body and configured to rotate around a rotation shaft and to move up and down;
an operating lever connected to the main body and the lift operation body and configured to move the lift operation body downwards when the operating lever is pushed down;
a restoring spring providing an upward elastic force to the lift operation body;
an iron pin former provided in the lift operation body to face the iron pin outlet and configured to bend opening ends of the fastening iron pin;
a tape pulling device positioned in the lift operation body, and comprising a pulling needle plate, a needle plate pressing spring, an operating plate, a spring, and a tape pressing protrusion, the pulling needle plate having a tape pulling needle drawing the binding tape and being rotatable inwards and outwards, the needle plate pressing spring providing an elastic force to enable the pulling needle plate to rotate inwards, the operating plate being in contact with the compression protrusion and moving upwards when the lift operation body primarily moves downwards to allow the pulling needle plate to rotate inwards such that the tape pulling needle strikes through the binding tape and the binding tape is hooked to the tape pulling needle, the spring applying a downward elastic force to the operating plate, and the tape pressing protrusion guiding the binding tape toward the iron pin former; and
a braking bar caught in a trap recess when the lift operation body primarily moves downwards to prevent the operating lever from being pushed down in a state where the binding tape is hooked to the tape pulling needle, the trap recess being provided in the operating plate.

2. The binding machine of claim 1, wherein the braking bar comprises:
a coil portion formed by winding a steel wire in a spiral and supported by the tape pulling device; and
an upper protruding rod and a lower protruding rod extending from opposite ends, respectively, of the coil portion toward the trap recess of the operating plate and the tape pressing protrusion, respectively.

3. The binding machine of claim 1, wherein an iron pin guide protrusion is provided on an inner surface of an iron pin bundle feeding slot of the iron pin supply part to protrude from a ceiling of the iron pin bundle feeding slot toward a bottom of the iron pin bundle feeding slot, and gaps are respectively formed beside and below the iron pin guide protrusion to allow one protrusion and an adjacent bottom portion of the fastening iron pin to pass.

4. The binding machine of claim 3, wherein a side opening is provided at one side of the iron pin bundle feeding slot, the side opening extending from an end of an inner side of the iron pin guide protrusion by a length corresponding to a length of the iron pin push bar.
